# EUROPÄISCHE PATENTSCHRIFT

(11) **EP 1 506 137 B1**
(45) Veröffentlichungstag und Bekanntmachung des Hinweises auf die Patenterteilung: **24.01.2007**
(21) Anmeldenummer: 03752697.7
(22) Anmeldetag: 09.05.2003
(51) Int. Cl.: C02F 1/52, C02F 1/68, B01F 1/00, B01F 5/04, B01F 5/06

(54) **VERFAHREN UND VORRICHTUNG ZUR KONTINUIERLICHEN AUFBEREITUNG VON WASSER**
METHOD AND DEVICE FOR THE CONTINUOUS TREATMENT OF WATER
PROCEDE ET DISPOSITIF DE TRAITEMENT D'EAU EN CONTINU

(30) Priorität: 22.05.2002 DE 10223037
(43) Veröffentlichungstag der Anmeldung: 16.02.2005
(73) Patentinhaber: Söll GmbH, 95028 Hof (DE)
(72) Erfinder: PILZ, Harald, 09122 Chemnitz (DE)
(74) Vertreter: Koch, Jens Christian
(86) Internationale Anmeldenummer: PCT/DE2003/001494
(87) Internationale Veröffentlichungsnummer: WO 2003/097537

(56) Entgegenhaltungen:
- WO-A-03/022413
- DE-C- 4 235 558
- DE-U- 20 009 961
- US-A- 5 409 672
- US-A- 6 132 629

## Beschreibung

Die Erfindung betrifft ein Verfahren und eine Vorrichtung zur kontinuierlichen Aufbereitung von Wasser, wobei dem Wasser proportional eine pulverförmige oder körnige, in Wasser lösliche Substanz zugegeben und beide zu einem Vorgemisch vermischt werden, wobei das Vorgemisch über ein Mischrohr einer Lösungs- und Mischzone eines Behälters mit turbulenter Strömung zugeführt und zu einem Lösungsgemisch aus Wasser, gelöster Sustanz, u. U. schwebenden, noch ungelösten Partikeln und bereits vorhandenen Reaktionsprodukten aufbereitet wird, wobei das die Lösungs-und Mischzone verlassende Lösungsgemisch mindestens über eine vorgegebene Reaktionszeit in einer Reaktionszone eines Reaktionsbehälters geführt wird und wobei schließlich das aufbereitete Wasser mit seinen veränderten Inhaltsstoffen über den Ausgang der Reaktionszone in einen Speicher oder zu einer weiteren Aufbereitungsstufe abgeführt wird.

Ein Verfahren dieser Art wurde bereits mit der DE 199 15 808 A1 vorgeschlagen. Das Rohwasser und das zu dosierende Pulver werden proportional zusammengeführt und vorgemischt, so dass das Pulver innerhalb eines weiterführenden Mischrohres weitgehend gleichmäßig verteilt ist und dann beginnt in Lösung zu gehen. Dem Lösungsprozess unmittelbar folgend beginnt die Lösung chemische Prozesse mit dem Wasser oder mit darin enthaltenen, mehr oder weniger gleichmäßig verteilten Stoffen.

Das Vorgemisch gelangt dabei über das Mischrohr in den nach unten verjüngten Bodenbereich eines kombinierten Mischreaktors (Lösungs- und Mischzone). Dort, im Bodenbereich des Behälters - wird das Vorgemisch mit noch ungelösten Partikeln von einer Mischpumpe angesaugt, in einem getrennten Raum intensiv weiter gemischt und mit der Strömung des Druckrohres in einer zum Boden des Mischreaktors gerichteten Strömung zurückgeführt. Oberhalb des Bodenbereiches befindet sich im Behälter eine große Übergangszone, in der sich unkontrolliert ungelöste Partikel aufhalten, die bei der vorhandenen, unkontrollierbaren Turbulenz auch über den Überlauf in den folgenden Reaktor gelangen können. Ein oder mehrere in Reihe geschältene Reaktionsbehälter sorgen für die abschließende Reaktion der Substanz im Wasser. Ausfällprodukte werden in Filtern abgeschieden.

Zwischen den Reaktionsbehältern vorgesehene Pumpen fördern das reagierende Lösungsgemisch in den Bodenbereich des folgenden Reaktors. Sie sorgen wiederum für eine intensive Mischung im Rohrleitungssystem und im Bodenbereich des jeweils folgenden Reaktors.

Der jeweils zweite und jeder folgende Reaktor-Behälter ist deutlich höher und hat einen steilen kegeligen unteren Abschnitt zum allmählichen Abbau der Turbulenz und eine große Übergangszone. Das sich jeweils im Bodenbereich befindliche Lösungsgemisch wird wiederum von einer Mischpumpe angesaugt, in einem separaten Raum gemischt und über das Druckrohr der Pumpe wieder in die Mischzone des Reaktors zurückgeführt. Auch hier ist wegen der hohen Turbulenz in der Mischzone jedes Reaktors auch oberhalb des kegeligen Abschnittes nochmals eine relativ große, sich vertikal erstreckende Übergangszone erforderlich. Die Reaktoren werden dadurch außerordentlich hoch.
Der Raumbedarf ist insbesondere bei ungünstiger Rohwasserbeschaffenheit erheblich. Die Gestehungskosten der Anlage und deren Betriebskosten sind hoch.

Durch die DE 200 09 961 U1 ist es bekannt geworden, frei zufließendes bereits ausreichend sauberes Oberfächen-, Brunnen- oder Quellwasser aufzubereiten. Mit dieser Anlage werden - in Weiterbildung der vorn beschriebenen Aufbereitungsanlage - Mischpumpen eingespart. Das zufließende Wasser erzeugt im nach unten verjüngten Bodenbereich des ersten Reaktor-Behälters eine ständige jedoch begrenzte Turbulenz. Die aus den Partikeln entstehende Lösung wird ausreichend gleichmäßig im Wasser verteilt.

Ungelöste Partikel, die schwerer sind als Wasser, werden, solange sie von der Strömung nicht mitgerissen werden, immer wieder in den Bodenbereich des Reaktors zurückgeführt. Schwebende Partikel dagegen verbleiben in der nach oben führenden Strömung. Sie lösen sich dort erst nach und nach auf. Die Lösung wird in der vorhandenen laminaren Strömung im Wasser nicht mehr ausreichend verteilt. Die Lösung bleibt zum Teil wirkungslos im bereits aufbereiteten Wasser. Kommen demgegenüber Lösungskonzentrationen zu irgendeinem Zeitpunkt mit auszuscheidenden Stoffen in Kontakt, dann steht nicht mehr ausreichend Zeit zur Verfügung, den Reaktionsprozess abzuschließen und evtl. entstehende Ausfällprodukte abzuscheiden.

Letztere werden ggf. erst nach den Filterprozessen gebildet. Die Ausfällprodukte setzen sich im Sammelbehälter oder gar erst in den Rohrleitungen ab.

Zur Sicherung einer ausreichenden Reaktionszeit wird ein besonders hoher Reaktor mit einem großen, unteren Kegelabschnitt zum Abbau der Turbulenz und mit einer ausreichend großen Übergangszone verwendet. Der sehr hohe Reaktor wird zu einem großen Teil in der Erde versenkt. Die Verwendung mehrerer Reaktoren, zwischen denen sich ungelöste Substanzkörner nicht unkontrolliert bewegen können, erfordert wieder zusätzliche Pumpen und große Kegelabschnitte und Übergangszonen zur Beruhigung der Strömung.

Diese Anordnung beschränkt sich in ihrer Anwendung regelmäßig auf die abschließende Aufbereitung (z. B. Einstellung des pH-Wertes) von relativ sauberem Wasser in begrenzten Mengen pro Zeiteinheit.

Durch die US 5 409 672 A ist es bekannt, zur Erzielung eines homogenen Gemisches aus Gasen und Flüssigkeiten oder aus unterschiedlichen Flüssigkeiten innerhalb eines Mischrohres stationäre Mischvorrichtungen anzuordnen.

Diese Mischvorrichtungen wurden in Strömungsrichtung unmittelbar nach dem Einbringen der zusätzlichen Mischkomponente angeordnet. Sie bestehen aus koaxial zum Mischrohr angeordneten, perforierten Rohrabschnitten, die von innen nach außen durchströmt werden. Zwischen den Rohrabschnitten entstehen am oberen Ende der Mischvorrichtung koaxiale Ringströmungen, die sich bald zu einer üblichen axialen Rohrströmung vereinen.

Die Aufgabe der vorliegenden Erfindung ist es, ein Verfahren und eine Vorrichtung, insbesondere für die kontinuierliche Aufbereitung von Wasser definierbarer Qualität vorzuschlagen, die es ermöglichen, die beim Auflösen von Partikeln chemischer Substanzen entstehende Lösung in allen Phasen des Misch-, Lösungs- und Reaktionsprozesses gleichmäßig in ausreichend großen Wassermengen möglichst kontinuierlich zu verteilen. Dabei soll insbesondere verhindert werden, dass noch unvollständig gelöste Partikel durch unkontrollierbare Strömungen in Phasen des Reaktionsprozesses gelangen, in denen eine Verteilung der Lösung und eine Reaktion mit unerwünschten Stoffen nicht mehr innerhalb einer kontrollierbaren Phase gewährleistet ist.
Die Gestehungs-, Betriebs- und Wartungskosten der Vorrichtung bzw. der Aufbereitungsanlage sollen einen vertretbaren Rahmen nicht übersteigen.

Erfindungsgemäß wird diese Aufgabe mit den Merkmalen des Verfahrens nach Anspruch 1 und/oder mit der Vorrichtung nach Anspruch 6 auf überraschend einfache Weise gelöst.

Mit der großräumigen Turbulenz wird in der Lösungs- und Mischzone ein ständiges Verteilen der entstehenden Lösung in einem ausreichend großen Wasservolumen erreicht. Der Strömungswandler schirmt die großräumige Turbulenz von der Reaktionszone ab. Er verhindert auch, dass ungelöste, noch der Schwerkraft oder dem Auftrieb folgende Partikel in die Reaktionszone gelangen.

Innerhalb der nunmehr abgegrenzten Reaktionszone erzeugt der Strömungswandler eine kleinwirbelige laminar-turbulente Strömung über den gesamten Querschnitt des Reaktors. Diese sorgt für die Verteilung der Lösung schwebend mitgerissener nur noch sehr kleiner, ungelöster Partikel in der jeweiligen Ebene. Ein unkontrolliertes Vorauseilen von schwebenden Partikeln oder ihrer Lösung findet nicht statt.

Der Lösungs- und Reaktionsprozess läuft durchweg in allen Phasen kontrolliert ab. Die Turbulenz, die für die Verteilung der Lösung über den Querschnitt erforderlich ist, wird mit niedrigster Energie aufrecht erhalten. Lange keglige Behälterabschnitte zur Beruhigung der turbulenten Strömungen und große Übergangszonen zur Vermeidung ausbrechender Turbulenzen werden, insbesondere durch die Strömungswandlung, vermieden.

Die Reaktionsbehälter bzw. Reaktoren werden auf eine minimale Größe begrenzt. Das aufbereitete Wasser besitzt in allen Teilen eine einheitliche Qualität. Die Verwendung des Verfahrens ist nicht auf besondere Rohwasserqualitäten begrenzt und kann bei kleinen Wassermengen pro Zeiteinheit ebenso eingesetzt werden, wie bei extrem großen Wasserdurchsätzen.

Mit der Verwendung von Strömungswandlern nach Anspruch 2 wird mit einfachen technischen Mitteln die partielle Verwirbelung über den gesamten Querschnitt der Reaktionszone geschaffen.

Es hat sich auch als zweckmäßig erwiesen, gemäß Anspruch 3, die Reaktionszone entlang einer vertikalen Achse auszurichten. Die Reibungsverhältnisse im Wandbereich wirken sich dabei nur gering auf die Gestaltung der Förderströmung aus.

Zur evtl. notwendigen Korrektur der Fördergeschwindigkeit über den gesamten Querschnitt der Reaktionszone werden die Maßnahmen gemäß Anspruch 4 vorgeschlagen.

Mit der ringförmigen Austragsöffung nach Anspruch 5 beugt man einer Erhöhung der Fördergeschwindigkeit im Zentrum der Reaktionszone vor.

Die in Anspruch 6 definierte Vorrichtung zur Ausführung des Verfahrens nach Anspruch 1 betrifft Lösungselemente, mit denen das Verfahren bei kleinstem Reaktor und geringstem Energieaufwand möglich wird.

Mit der Gestaltung der Strömung im Sammelraum unterhalb (die Substanz hat eine höhere Dichte als Wasser) oder oberhalb (die Substanz ist leichter als Wasser) des Strömungswandlers nach Anspruch 7 wird eine Verteilungsströmung erzeugt, die überwiegend horizontale Komponenten hat und die Strömung jenseits des Strömungswandlers kaum beeinträchtigt. Werden im Sammelraum zusätzliche Strömungsleitelemente gemäß Anspruch 8 angeordnet, kann man in Abhängigkeit von der Menge der zu dosierenden Substanz diesen Sammelraum als Lösungs- und Mischzone verwenden.

Die Verwendung der Durchflussquerschnitte nach Anspruch 9 führt zu optimalen Strömungsbedingungen im Eingangsbereich der Reaktionszone.

Die Gestaltung des Strömungswandlers nach Anspruch 10 sichert eine preiswerte Fertigung desselben.

Der Strömungswandler nach Anspruch 11 sichert eine gleichmäßige Fördergeschwindigkeit über den gesamten Querschnitt der Reaktionszone - auch bei relativ langen Lösungs- und Reaktionszeiten.

Mit den Modifikationen des Strömungswandlers nach Anspruch 12 vermeidet man besonders energiereiche Kernströmungen in den Öffnungen der Strömungswandler.

Die Ausrichtung und die Querschnittsgestaltung der Reaktionszone nach Anspruch 13 sorgt für eine optimale Fördergeschwindigke it verteilt über den Querschnitt des Reaktors, für eine optimale Anpassung an räumliche Begebenheiten und für eine Anpassung an unterschiedlliche Wasserdurchsätze.

Die Modifikationen der Strömungsgestaltung nach Anspruch 14 und Anspruch 15 führen zu einer optimalen Mischfunktion im Sammelraum und sorgen für eine großräumige Verteilung neu gebildeter Lösung über den gesamten Querschnitt der nachgeschalteten Reaktionszone.

Die Verwendung elliptischer, verdrehbarer Querschnitte einzelner Elemente des Rohrgitters nach Anspruch 16 bietet Möglichkeiten für eine Veränderung der Wirbelcharakteristik nach dem Strömungswandler.

Die Maßnahmen nach Anspruch 17 dienen der Wartung und Pflege des Strömungswandlers.

Die Art der Befestigung des Rohrgitters nach Anspruch 18 eignet sich vor allem in Anlagen mit kleinem Wasserdu rchsatz und zylindrischen Reaktionsbehältern, wenn leichte Kunststoffrohre eingesetzt werden.

Die Verwendung von Rohren oder Stäben mit bestimmten Rauhigkeitswerten - nach Anspruch 19 - hat Einfluss auf die Gestaltung der Größe der Turbulenz und der sich bildenden Wirbel unmittelbar hinter dem Strömungswandler. Niedrige Rauhigkeitswerte sind von besonderem Vorteil.

Mit der Anlage nach Anspruch 20 wird die Voraussetzung dafür geschaffen, dass zu einem sehr frühen Zeitpunkt der Lösungs- und Mischvorgang abgeschlossen werden kann. Schwebende Partikel können sich bereits im Lösungsrohr vollständig auflösen. Der Sammelraum dient dann nur noch der abschließenden Verteilung des Lösungsgemisches vor dem Erreichen des Reaktionsraumes. Die Größe des Reaktors kann weiter begrenzt werden.

Die Gestaltung der Vormischzone nach Anspruch 21 sorgt für eine sehr frühzeitige proportionale Verteilung der Substanz im Wasser unter Ausschluss von Zonen unterschiedlicher Konzentration.

Die Arbeitsweise mit zwei einem Reaktor zugeordneten Speicherbehältern - nach Anspruch 22 - erleichtert die Wartung des Reaktors und der Speicherbehälter bei kontinuierlichem Betrieb.

Die Erfindung soll nachfolgend an Ausführungsbeispielen näher erläutert werden. In den dazu gehörigen Zeichnungen zeigen:
- Fig. 1: eine schematische Darstellung des Misch-, Lösungs- und Reaktionsprozesses in einer Wasseraufbereitungsanlage,
- Fig. 2: einen Querschnitt entlang der Linie II - II in Fig. 1 bei Verwendung eines runden Reaktionsbehälters,
- Fig. 3: einen Querschnitt analog zur Fig. 2 unter Verwendung eines rechteckigen Reaktionsbehälters,
- Fig. 3a: einen Schnitt entlang der Linie III - III in Fig. 3,
- Fig. 4: einen vergrößerten Teilschnitt durch den Sammelraum, den Strömungswandier und einen Teil der Reaktionszone in einem Reaktor,
- Fig. 5: eine Querschnittsdarstellung eines Details durch einen Strömungswandler mit einstellbarem Strömungsquerschnitt,
- Fig. 6: eine Draufsicht auf einen Teil eines runden Strömungswandlers mit bajonettartiger Lagerung im Reaktor mit Blickrichtung zum Sammelraum,
- Fig. 7: eine Draufsicht auf ein Detail eines Strömungswandlers mit einer Vielzahl runder Durchtrittsöffnungen,
- Fig. 7a: einen Querschnitt entlang der Linie a - a in Fig. 7,
- Fig. 8: eine Gesamtdarstellung einer Aufbereitungsanlage mit separater Lösungs- und Mischzone,
- Fig. 9: eine schematische Darstellung der Vormischzone, der Lösungs- und Mischzone im Reaktor und der Anordnung des Strömungswandlers bei Verwendung von Substanzen, die leichter sind als Wasser und
- Fig. 10: eine Gesamtanordnung einer Aufbereitungsanlage für große Wasserdurchsätze mit Vormischzone im Bereich einer Bypassleitung und horizontal angeordneten Reaktoren.

Die Vorrichtung zur Aufbereitung von Wasser besteht aus einer Vormischanordnung V, aus einer Lösungs- und Mischzone LM und einer abgegrenzten Reaktionszone R in einem Reaktor 5. Vorrichtungen zum Abscheiden evtl. entstehender Ausfällprodukte sind - falls erforderlich - vorgesehen, werden jedoch nicht dargestellt.

In der Vormischanordnung V wird mittels einer bekannten, kontinuierlich arbeitender Dosiervorrichtung 1 ein Substrat S in eine axiale trichterförmige Strömung des Rohwassers WR dosiert. Das Rohwasser WR gelangt unter Ausbildung dieser trichterförmigen Strömung über eine Rohrleitung 21 in eine Ringdüse 212, die sich konzentrisch zum Fangtrichter 22 und oberhalb desselben befindet.

In diesem Fangtrichter 22 bildet sich die axiale Trichterströmung aus. Im Zentrum dieses Fangtrichters 22 trifft die durch das Abschirmrohr 11 fallende Substanz S in die extrem turbulente Strömung des Rohwassers WR. Es entsteht in hoher Turbulenz ein Vorgemisch, in dem Rohwasser WR und Substanz S proportional verteilt sind. Das Vorgemisch wird im Mischrohr 23 unter Aufrechterhaltung einer notwendigen Turbulenz nach unten geführt. In diesem Mischrohr 23 beginnt bereits der Lösungsprozess. Die entstehende Lösung wird - soweit es die Bewegung innerhalb des Querschnittes des Mischrohres zulässt - verteilt und schließlich in den Sammelraum 3 im Bodenbereich des Reaktors 5 geführt.

Im Bodenbereich des Reaktors 5 ist die Mündung des Mischrohres 23 über den Krümmer 231 - vorzugsweise bei einem runden Reaktor - in Uhrzeigerrichtung (Nordhalbkugel) in Umfangsrichtung ausgerichtet. Strömungsleitelemente 24, 24' und 24" führen Teile der tangentialen Strömung radial zur Mitte und ermöglichen in der großräumigen Turbulenz die Verteilung der entstehenden Lösung in einem ausreichend großen Volumen. Die Lösung wird mit geringsten Toleranzen in dem Lösungsgemisch WL gleichmäßig verteilt.

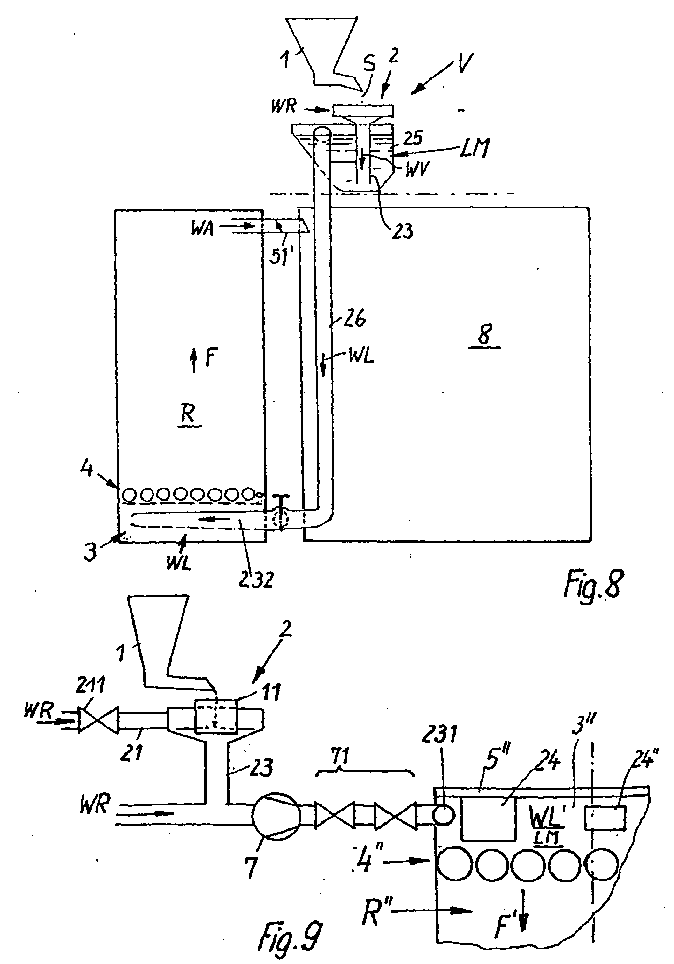

Diese hier beschreibene Lösungsmischzone LM im Bodenbereich des Reaktors 5 kann auch als Sammelraum 3 bezeichnet werden, wenn der Lösungsprozess bereits im Mischrohr 23 oder einer davor angeordneten Lösungs- und Mischzone LM (vgl. Fig. 8) abgeschlossen ist. In einem solchen Fall hat der Sammelraum 3 nur noch Korrekturfunktionen und eine Verteilfunktion des homogenen Lösungsgemisches WL zur Vorbereitung der kontrollierten Reaktion innerhalb des Reaktors 5.

Das im Sammelraum 3 bereit gestellte Lösungsgemisch WL wird über einen Strömungswandler 4, der sich über den gesamten Eingangsquerschnitt des Reaktors 5 erstreckt, in die Reaktionszone R übergeleitet. Dabei entspricht der Eingangsquerschnitt dem Querschnitt A_{R} der Reaktionszone R. Die Reaktionszone R ertreckt sich mit gleichbleibendem Querschnitt A_{R} vertikal nach oben. Die Höhe der Reaktionszone R ergibt sich aus dem Wasserdurchsatz der Anlage pro Zeiteinheit, dem Querschnitt A_{R} des Reaktors 5 und den erforderlichen Reaktionszeiten der üblicherweise verwendeten Substanz S.

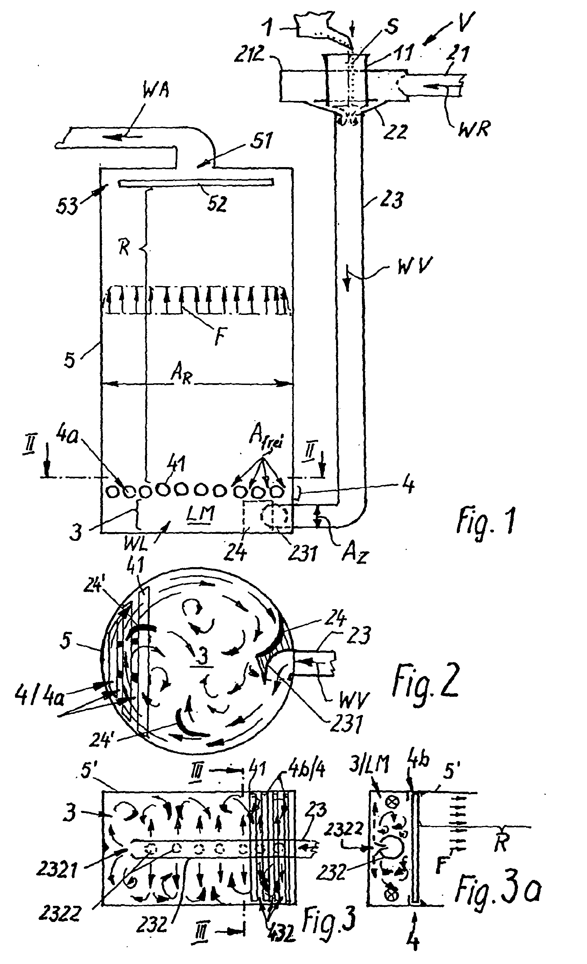

Der Strömungswandler 4 besteht im Fall der Fig. 1 aus einem Rohrgitter 4a, bestehend aus einer Vielzahl von Rohren 41, die in gleichmäßigen und geringen Abständen voneinander über den gesamten Querschnitt des Reaktors 5 verteilt angeordnet sind. Der Querschnitt A*_{frei}* der Summe aller Durchgangsöffnungen 431 liegt zwischen 2 % und 15 % des Querschnittes A_{R} des Reaktors 5 über dem Strömungswandler 4.

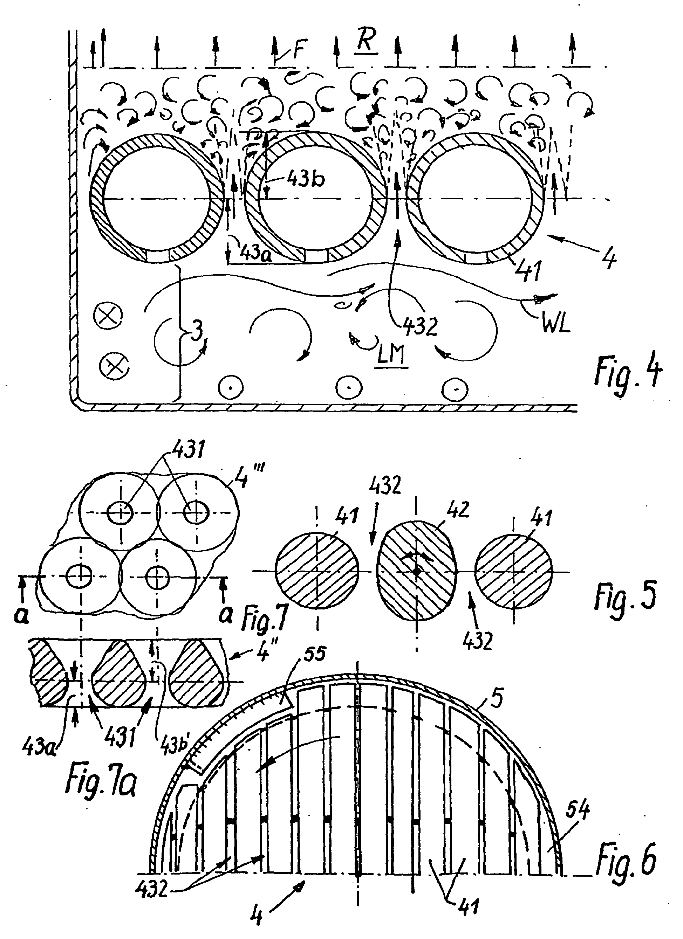

Die durch die Öffnungen 431 des Strömungswandlers 4 durchtretenden Kemströmungen erzeugen - wie besonders aus Fig. 4 ersichtlich ist - unmittelbar oberhalb des Rohrgitters 4 bzw. 4a, 4b eine gleichmäßige und intensive turbulente Strömung mit relatv kleinen Wirbeln, die mindestens im unteren Bereich der Reaktionszone R eine Verteilung der Lösung mit noch schwebenden Partikeln der Substanz S über den gesamten Querschnitt A_{R} des Reaktors 5 ermöglicht.

Die im Reaktor 5 entstehende Strömung bezeichnen wir als sog. laminar-turbulente Strömung. Die Fördergeschwindigkeit F dieser Strömung ist, abgesehen von den Randbereichen, über den gesamten Querschnitt A_{R} nahezu konstant. Unkontrollierte Strömungen, in denen sich ungelöste Partikel vorzeitig aus dem Reaktor entfernen können, existieren nicht.

Die Höhe des Reaktors kann - wie bereits erwähnt - in Abhängigkeit von der Durchsatzleistung, vom Querschnitt A_{R} des Reaktors 6 und von der erforderlichen Reaktionszeit rechnerisch bestimmt werden. Die gesamte, sich ausbildende Lösung kann mit dem Wasser oder mit den darin enthaltenen Stoffen in gewünschter Weise reagieren. Eine Überdosierung kann weitgehend vermieden werden.

Der gewünschte chemische Prozess ist in allen Teilen des Wassers abgeschlossen, bevor das aufbereitete Wasser WA über die Austragsöffnung 51 zu einem Sammelbehälter 8 oder zu einer weiteren Aufbereitungsstufe - z. B. Filter - geführt wird.

Zur Erhaltung einer einheitlichen Fördergeschwindigkeit F im Reaktor 5 über den ganzen Querschnitt A_{R} bis in den Kopfbereich hinein wird nahe des Umfanges des Reaktors eine ringfömige Austragsöffnung 53 mittels Strömungsplatte 52 ausgebildet, bevor das aufbereitete Wasser WA die Austragsöffnung 51 erreicht. Damit wird verhindert, dass die Fördergeschwindigkeit F in der Reaktionszone R nahe der Achse des Reaktors 5 zum Kopfbereich hin zunimmt.

Für relativ kleine Durchsatzmengen wird empfohlen, runde Querschnitte für den Reaktor 5 vorzusehen. Die Organisation der turbulenten Strömung im Sammelraum mit der Lösungs- und Mischzone wird in ausreichender Weise durch das tangentiale Einströmen des Lösungsgemisches und mindestens ein radial ausgerichtetes Strömungsleitelement 24 erreicht (Fig. 2).

Die Hauptbestandteile der großräumigen turbulenten Strömung in diesem Sammelraum 3 sind tangentiale und radiale Strömungselemente. Axiale Strömungselemente sind nur in untergeordneten Größenordnungen vorhanden.

Als Reaktoren 5' für größere Durchsatzmengen werden solche mit rechteckigen Querschnitten (Fig. 3 und 3a) empfohlen. Die Organisation der turbulenten Strömungen im Sammelraum 3 erfolgt hier durch ein sog. Verteilerrohr 232. Dieses Verteilerrohr 232 erstreckt sich nahe über dem geschlossenen Boden des Reaktors 5. Es hat eine stimseitige Öffnung 2321, durch die der Hauptstrom auf die gegenüberliegende Wand des Sammelraumes 3 trifft und zwei etwa tangentiale Strömungen im Sammelraum 3 ausbildet. An der Unterseite hat dieses Verteilerrohr 232 mehrere Öffnungen 2322, durch die strahlenförmig ein Teil des Lösungsgemisches WL gegen den Boden hin austritt. Dort bilden sich nach außen gerichtete Querströmungen aus, die mit den tangentialen Strömungen eine ausreichende großräumige Turbulenz erzeugen. Diese großräumige Turbulenz gewährleistet, dass die Lösung im Gemisch gleichmäßig und homogen verteilt wird.

Der Strömungswandler 4 - hier ausgebildet als Rohrgitter 4b - besteht aus einer Vielzahl von Rohren 41, die durch entsprechende Aufnahmen im Randbereich des Reaktorraumes fixiert sind. Diese Rohre 41 sind vorzugsweise einzeln entnehm bar und können auf diese Weise einfach gereinigt bzw. gewartet werden.

Auch hier entsteht oberhalb des Strömungswandlers 4 eine turbulent-laminare Strömung in oben bereits beschriebener Weise mit einer über den Querschnitt etwa konstanten Fördergeschwindigkeit F (vgl. Fig. 1).

Die Oberflächenbeschaftenheit der Rohre 41 ist keinen besonderen Qualitätsanforderungen unterworfen. Es sollte jedoch vermieden werden, dass sich an den Rohren starke Unebenheiten befinden, die zum Stau ungelöster Partikel oder zum Absetzen von Ausfällprodukten anregen. Ein Rauhigkeitswert zwischen K = 0,001 (Kunststoffrohre) und K = 0,1 (Stahlrohre) hat sich bewährt.

Die Wirkungsweise des Strömungswandlers 4 ist hinsichtlich seiner Funktionsweise nochmals in Fig. 4 optisch veranschaulicht. Die im Sammelraum 3 nochmals großräumig gemischte Flüssigkeit bzw. das Lösungsgemisch WL wird zunächst im unteren Bereich 43a der bogenförmig begrenzten Öffnungen 432 düsenförmig beschleunigt. Diese Strömung bildet im engsten Bereich einen sich nach oben erweiternden Strömungskegel aus, von dem sich im Diffusionsabschnitt 43b unregelmäßig und auf begrenztem Raum wirbelnde Strömungen ablösen. Die so entstehende Turbulenz ist räumlich begrenzt. Sie reicht aus, um die Lösung aus evtl. vorhandenen ungelösten, schwebenden Partikeln über den Querschnitt A_{R} gleichmäßig zu verteilen. Diese Turbulenz ist aber nicht in der Lage, die Lösung über größere Abschnitte in Richtung der Fördergeschwindigkeit F zu verteilen. Damit wird gewährleistet, dass für alle Teile der Lösung eine einheitliche Reaktionszeit zur Verfügung steht.

Der Vorteil dieser Arbeitsweise mit Strömungswandler 4 über den gesamten Querschnitt des Reaktors 5 besteht schließlich darin, dass sich keine unkontrollierten Strömungen zwischen der turbulenten Lösungsmischzone LM und der Austragsöffnung 51 des Reaktors ausbilden können.

In der Regel ist keine zusätzliche Energie für das Ausbilden der Turbulenz in der Lösungsmischzone LM und in dem unteren Bereich des Reaktionsbehälters 5 erforderlich. Es reicht die Strömungsenergie des Zulaufes, die kontinuierlich die erforderlichen Turbulenzen aufrecht erhält.

An Stelle der schlitzförmigen Öffnungen im Strömungswandler 4 in den Ausführungen der Rohrgitter 4a und 4b können auch runde Öffnungen 431 im Strömungswandler 4"' vorgesehen werden Fig. 7 und Fig. 7a. Wichtig ist jedoch, dass die Querschnitte der Öffnungen 431 so geformt sind, dass sich im unteren dem Sammelraum zugewandten Teil der Öffnung ein Düsenabschnitt 43a und nach oben hin ein sog. Diffusorabschnitt 43b ausbildet. Wichtig ist bei der Wahl der Abmessungen, dass sich zwischen den Öffnungen 431 auf der Oberseite keine ebenen Flächen ausbilden, auf denen sich Partikel absetzen können.

In Abhängigkeit vom aufzubereitenden Wasser WR und in Abhängigkeit von der beizufügenden chemischen Substanz S, deren Lösungsfähigkeit unterschiedlich sein kann, kann es geboten sein, die Wirkungsweise des Strömungswandlers 4 in vorgegebenen Grenzen zu korrigieren. Zu diesem Zweck wird vorgeschlagen, einige der Rohre oder Stäbe 42 mit einem elliptischen Querschnitt zu versehen und sie um eine Achse schwenkbar anzuordnen (vgl. Fig. 5). Es ist auch möglich, unterschiedliche Winkelaufnahmen vorzusehen, in die der Stab 42 mit dem elliptischen Querschnitt in unterschiedlichen Winkellagen eingesetzt werden kann.

Eine Art der Befestigung eines Rohrgitters 4a ist beispielhaft in Fig. 6 dargestellt. Die Rohre 41 des Rohrgitters 4a sind wegen ihrer unterschiedlichen Abmessungen und Formen fest miteinander verbunden. Wie aus Fig. 4 zu sehen ist, haben alle Rohre 41 unten eine Bohrung oder sind stirnseitig offen. Sie sind bei leerem Reaktor 5 leicht handhabbar, füllen sich beim Betrieb mit Wasser und haben so einen geringeren Auftrieb. Eine Ausnehmung am Umfang des Rohrgitters 4a ermöglicht das ungehinderte Einsetzen des Rohrgitters auf den Auflagering 54 - am Sicherungsabschnitt 55 vorbei. Wird das Rohrgitter 4a dann gedreht, hält der Sicherungsabschnitt die normal langen Rohre 41 gegen die Wirkung der Strömung und/oder des Auftriebes. Es können am Umfang des Rohrgitters 4a mehrere Ausnehmungen und mehrere Sicherungsabschnitte 55 vorgesehen sein.

Fig. 8 zeigt noch einmal in schematischer Darstellung eine Aufbereitungsanlage - ähnlich Fig. 1 - in einer etwas abgewandelten Anlage. Die Lösungs- und Mischzone LM befindet sich hier unmittelbar unterhalb der Vormischanlage V. Das Mischrohr 23 führt in den verjüngten Bodenbereich eines Lösungsmischbehälters 25. Der Überlauf dieses Lösungsmischbehälters 25 ist über ein Lösungsrohr 26 mit dem Sammelraum 3 verbunden.

Der Vorteil dieser Anordnung besteht darin, dass große Partikel der Substanz S überhaupt nicht in den Reaktionsbehälter 5 gelangen. Lediglich solche Partikel gelangen in das Lösungsrohr 26, die bereits von der Strömung mitgerissen werden können. Deren Lösung ist mit hoher Sicherheit im Sammelraum 3 bereits abgeschlossen. Der Strömungswandler 4 hat überwiegend Sicherungsfunktionen und sorgt für eine konstante Fördergeschwindigkeit F in der Reaktionszone R und damit für eine einheitliche Reaktionszeit für alle Querschnittsbereiche der Strömung.

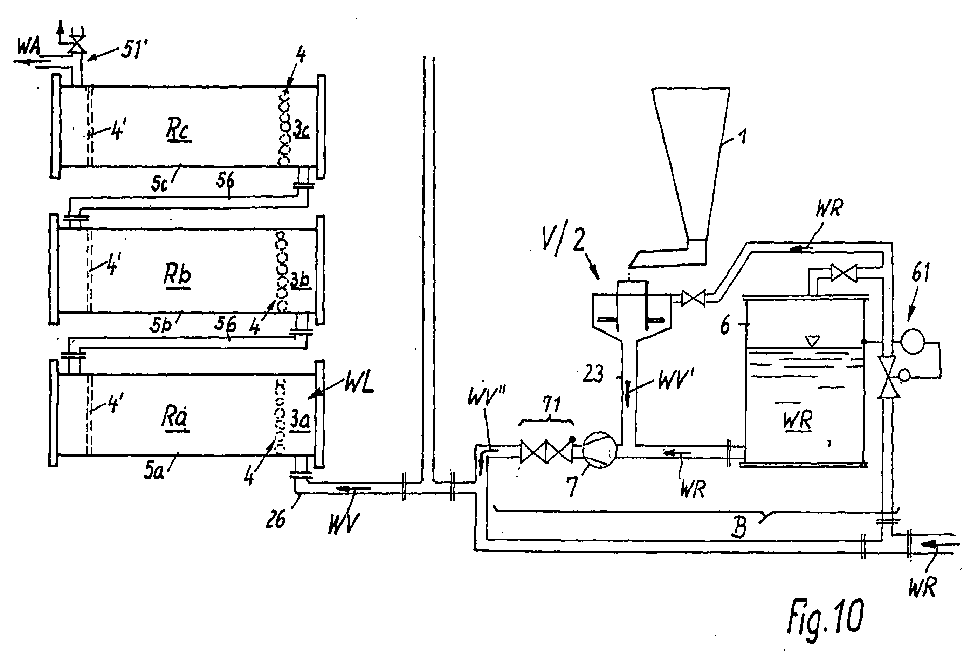

In Fig. 9 ist ein Verfahrensabschnitt dargestellt, bei dem eine Substanz dem Wasser zugemischt wird, die leichter ist als Wasser. Die Vormischanlage mit der Dosiereinheit 1 hat noch die übliche Ausführung. Sie ist jedoch in einer sog. Bypassleitung B angeordnet. Eine Pumpe 7 saugt das aus dem Mischrohr 23 kommende Vorgemisch WV sowie das aus einer weiteren Leitung kommende Rohwasser WR und fördert es über Stellventile 71 in einen im Kopfbereich eines Reaktors 5" angeordneten Sammelraum 3". Der Sammelraum 3" ist mit Strömungsleitelementen 24" ausgestattet und dient als Lösungs- und Mischzone LM. Diese Lösungs- und Mischzone wird unten von einem Strömungswandler 4" in der beschriebenen Art begrenzt. Die Fördergeschwindigkeit F' ist nach unten gerichtet.

Eine weitere Ausgestaltung der Anlage mit dem erfindungsgemäßen Verfahren sehen wir in Fig. 10. Diese Art findet bevorzugt bei der Aufbereitung sehr großer Wassermengen pro Zeiteinheit Anwendung.

Das Vorbereiten des Vorgemisches erfolgt hier nach dem sog. Bypassverfahren, wie es in Bezug auf Fig. 9 bereits beschrieben wurde. Das Rohwasser WR wird über drei Leitungssysteme zeitweilig parallel geführt. Die erste Leitung führt das Rohwasser WR in die Vormischanlage V. Es entsteht ein Vorgemisch V' hoher Konzentration. Die Pumpe 7 saugt das Vorgemisch V' und Rohwasser WR aus einem zweiten Strang mit einem mittels Füllstandsregler 61 gefüllten Rohwasserspeicher 6 und liefert über die Stellventile 71 ein weniger konzentriertes Vorgemisch WV". Über das Druckrohr der Pumpe 7, das den sog. Bypass B abschließt, wird unter Zumischung weiteren Rohwassers WR aus einem dritten Strang die endgültige Konzentration des Vorgemisches WV geschaffen, die dann in den Sammelraum 3a des ersten Reaktors 5a geführt wird.

Es sind in dieser Anlage drei horizontal ausgerichtete Reaktoren 5a, 5b, 5c angeordnet, die über Zwischenrohre 56 in Reihe hintereinander geschalten sind. In jedem der Reaktoren sind Sammelräume 3a, 3b, 3c und Reaktionszonen Ra, Rb, Rc vorgesehen. Die Trennung der Zonen erfolgt jeweils über Strömungswandler 4 bzw. 4'. Die Rohre der Strömungswandler 4 und 4' sind zueinander um 90° versetzt.

### Bezugszeichenliste

- 1: Dosiervorrichtung
- 11: Abschirmrohr
- 2: Mischvorrichtung
- 21: Rohwasserzuführung
- 211: Stellventil
- 212: Ringdüse
- 22: Fangtrichter
- 23: Mischrohr
- 231: Krümmer
- 232: Verteiler
- 2321: Stimöffnung
- 2322: radiale Öffnungen
- 24, 24', 24": Strömungsleitelement
- 25: Lösungsmischbehätter
- 26: Lösungsrohr
- 3, 3": Sammelraum
- 3a, 3b, 3c: Sammelraum (horiz. Reaktorkette)
- 4, 4', 4": Strömungswandler
- 4a: Rohrgitter, rund
- 4b: Rohrgitter, rechteckig
- 41: Rohr, Stab
- 42: Rohr, Stab, elliptisch
- 431: Öffnung, rund
- 432: Öffnung, schlitzförmig
- 43a: Düsenabschnitt
- 43b, 43b': Diffusorabschnitt
- 5, 5', 5": Reaktor
- 5a, 5b, 5c: Reaktor, horizontal
- 51, 51': Austragsöffnung
- 52: Strömungsplatte
- 53: Austragsöffnung, ringförmig
- 54: Auflagering
- 55: Sicherungsabschnitt
- 56: Zwischenrohr
- 6: Rohwasserspeicher
- 61: Füllstandsregler
- 7: Pumpe
- 71: Stellventile
- 8: Hochbehälter

- A_{R}: Querschnitt, Reaktor
- A_{frei}: Querschnitt, Strömungswandler,frei
- A_{Z}: Querschnitt, Zulauf

- V: Vormischanordnung
- LM: Lösungs- und Mischzone
- B: Mischbypass
- R, R": Reaktionszone
- Ra, Rb, Rc: Reaktionszone, horiz. Reaktoren
- F, F': Fördergeschwindigkeit (Richtung)
- WR: Rohwasser
- WV, WV, WV": Vorgemisch
- WL: Lösungsgemisch, Substrat schwerer als Wasser
- WL': Lösungsgemisch, Substrat leichter als Wasser
- WA: Wasser, aufbereitet
- S: Substanz

## Patentansprüche

1. Verfahren zur kontinuierlichen Aufbereitung von Wasser,
wobei dem Wasser proportional eine pulverförmige oder körnige, in Wasser lösliche Substanz zugegeben und beide zu einem Vorgemisch vermischt werden,
wobei das Vorgemisch über ein Mischrohr einer Lösungs- und Mischzone eines Behälters mit turbulenter Strömung zugeführt und zu einem Lösungsgemisch aus Wasser, gelöster Substanz, u. U. schwebenden, noch ungelösten Partikeln und bereits vorhandenen Reaktionsprodukten aufbereitet wird,
wobei das die Lösungs- und Mischzone verlassende Lösungsgemisch mindestens über eine vorgegebene Reaktionszeit in einer Reaktionszone eines Reaktionsbehälters geführt wird und
wobei schließlich das aufbereitete Wasser mit seinen veränderten Eigenschaften über den Ausgang der Reaktionszone in einen Speicher oder zu einer weiteren Aufbereitungsstufe abgeführt wird,
**dadurch gekennzeichnet,**
**dass** das Lösungsgemisch, das die Lösungs- und Mischzone (LM) im Bereich eines Sammelraumes (3) verlässt, über den Eingangsquerschnitt einer querschnittskonstanten Reaktionszone (R) gleichmäßig verteilt wird,
**dass** das verteilte Lösungsgemisch (WL) am Übergang vom Sammelraum (3) zum Reaktor (5) mittels Strömungswandler (4), der eine Vielzahl von gleichmäßig über den Eingangsquerschnitt des Reaktors (5) verteilten Öffnungen (43) besitzt, die mit zur Reaktionszone (R) gerichteten Diffusorabschnitten (43b) versehen sind, in die Reaktionszone (R) des Reaktors (5) geführt wird und
**dass** das Lösungsgemisch (WL) in der Reaktionszone (R), beginnend in der Ebene der Dififusorabschnitte (43b) über den nahezu gesamten Querschnitt des Reaktors (5) eine kleinwirbelige laminar-turbulente Strömung mit überwiegend einheitlicher Fördergeschwindigkeit (F) zwischen 2 mm/sec und 25 mm/sec zum Ausgang der Reaktionszone (R) ausbildet.

2. Verfahren nach Anspruch 1, **dadurch gekennzeichnet,**
**dass** das Lösungsgemisch (WL) im Strömungswandler (4) über Öffnungen in Form von zueinander parallelen Schlitzen (432) mit bogenförmig begrenzten konkaven Querschnitten (Diffusorabschnitte 43b, Düsenabschnitte 43a) in die Reaktionszone (R) geführt wird.

3. Verfahren nach Anspruch 1, **dadurch gekennzeichnet,**
**dass** das reagierende Lösungsgemisch (WL) in der Reaktionszone (R) innerhalb einer entlang einer gestreckten, überwiegend vertikalen Achse verlaufenden Strömung mit Fördergeschwindigkeit (F) mit gleichbleibendem Querschnitt (A_{R}) geführt wird.

4. Verfahren nach Anspruch 1, **dadurch gekennzeichnet,**
**dass** in dem reagierenden Lösungsgemisch (WL) innerhalb der Reaktionszone (R) in Strömungsrichtung, im Abstand hinter dem ersten Strömungswandler (4) mit Hilfe eines weiteren Strömungswandlers (4') die kleinwirbelige laminar-turbulente Strömung erneut angeregt wird.

5. Verfahren nach Anspruch 1 und 3, **dadurch gekennzeichnet,**
**dass** das reagierende Lösungsgemisch (WL) am Ende der vertikalen Reaktionszone (R) über eine ringförmige, etwa koaxial zum Querschnitt der Reaktionszone (R) ausgerichtete Austragsöffnung (53) abgeführt wird.

6. Vorrichtung zur Aufbereitung von Wasser,
mit einer Zuführung für ein Vorgemisch (WV) aus Rohwasser (WR) und einer darin gleichmäßig verteilten, löslichen Substanz (S),
mit einer in einem Behälter befindlichen Lösungs- und Mischzone (LM), in der feststehende und/oder bewegliche Mischelemente angeordnet sind,
mit einer Reaktionszone (R) in einem behälterförmigen Reaktor (5), in der das Lösungsgemisch (WL) in einer Strömung über eine vorgegebene Strecke mit dem Wasser und/oder mit darin verteilten Stoffen chemisch reagiert,
zur Ausführung des Verfahrens nach Anspruch 1,
**dadurch gekennzeichnet,**
**dass** der behälterförmige Reaktor (5)
- mindestens im Bereich der Reaktionszone (R)
- quer zur Strömung des reagierenden Lösungsgemisches (WL) einen gleichbleibenden Querschnitt (A_{R}) aufweist, der größer ist als 0,05 m²,
**dass** im Eingangsbereich der Reaktionszone (R), der etwa dem Querschnitt des reaktors (5) entspricht, ein Strömungswandler (4, 4", 4"') mit einer Vielzahl von über den Querschnitt (A_{R}) der Reaktionszone (R) verteilten Öffnungen (43), deren Querschnitte nach der Art von Venturidüsen (Düsenabschnitt 43a, Diffusorabschnitt 43b) gestaltet sind, angeordnet ist, und
**dass** vor dem Eingangsbereich der Reaktionszone (R), in Flussrichtung vor dem Strömungswandler (4, 4", 4"') ein Sammelraum (3) für das Lösungsgemisch (WL) angeordnet ist.

7. Vorrichtung nach Anspruch 6, **dadurch gekennzeichnet,**
**dass** das Vorgemisch (WV) oder das vorbereitete Lösungsgemisch (WL) führende Mischrohr (23) oder Lösungsrohr (26) mit seiner Achse parallel zur Ebene des Strömungswandlers (4, 4°, 4"') in den Sammelraum (3) mündet.

8. Vorrichtung nach Anspruch 6, **dadurch gekennzeichnet,**
**dass** der Sammelraum (3) als Lösungs- und Mischzone (LM) ausgebildet und
**dass** innerhalb des Sammelraumes (3) feste und/oder bewegliche Strörnungsleitelemente (231; 2321, 2322; 24, 24', 24°) angeordnet sind.

9. Vorrichtung nach Anspruch 6, **dadurch gekennzeichnet,**
**dass** die Summe der Durchflussquerschnitte (A_{frei}) der Öffnungen des Strömungswandlers (4, 4', 4", 4"') zwischen 2 % und 15 % des Querschnittes (A_{R}) der Reaktionszone (R) des Reaktors (5) beträgt.

10. Vorrichtung nach Anspruch 6; **dadurch gekennzeichnet,**
**dass** der Strömungswandler (4, 4', 4") als Stab- oder Rohrgitter (4a, 4b) mit zueinander parallel ausgerichteten Stäben oder Rohren (41) ausgebildet ist.

11. Vorrichtung nach Anspruch 6, **dadurch gekennzeichnet,**
**dass** der Strömungswandler (4) aus zwei im Abstand voneinander angeordneten Rohrgittern (4a; 4b bzw 4, 4') besteht, deren Rohre (41) einander kreuzen.

12. Vorrichtung nach Anspruch 6, **dadurch gekennzeichnet,**
**dass** der Durchflussquerschnitt (A_{frei}) des Strömungswandlers (4, 4') gleich oder größer ist als der Querschnitt (A_{Z}) der Zuleitung über das Mischrohr (23) oder Lösungsrohr (26).

13. Vorrichtung nach Anspruch 6, **dadurch gekennzeichnet,**
**dass** die Reaktionszone (R) des Reaktors (5) entlang einer senkrechten Achse angeordnet ist und
**dass** der Querschnitt (AR) des Reaktors (5, 5') rechteckig, kreisförmig oder oval ausgebildet ist.

14. Vorrichtung nach Anspruch 6, **dadurch gekennzeichnet,**
**dass** das Mischrohr (23) oder das Lösungsrohr (26) tangential in den als Lösungs-und Mischzone (LM) ausgebildeten runden oder ovalen Sammelraum (3) mündet und
**dass** mindestens am Ende des ersten Umlaufes der tangentialen Strömung ein radial nach innen gerichtetes Strömungsleitelement (24) angeordnet ist.

15. Vorrichtung nach Anspruch 6, **dadurch gekennzeichnet,**
**dass** sich das Mischrohr (23) als Verteiler (232) radial über die Mitte des als Lösungs- und Mischzone (LM) ausgebildeten Sammelraumes (3) erstreckt,
**dass** sich die Stirnöffnung (2321) des Verteilers (232) im Abstand vor der gegenüber liegenden Wand des Sammelraumes (3') befindet und
**dass** der Verteiler (232) innerhalb des Sammelraumes (3) an der, der geschlossenen Stirnwand des Sammelraumes (3) zugewandten Seite mehrere, voneinander beabstandete radiale Öffnungen (2322) hat.

16. Vorrichtung nach Anspruch 6 und 10, **dadurch gekennzeichnet,**
**dass** das Rohrgitter (4a, 4b) mindestens einen Stab oder ein Rohr (42) mit elliptischem Querschnitt aufweist, der/das um eine Längsachse einstellbar ist.

17. Vorrichtung nach Anspruch 6, **dadurch gekennzeichnet,**
**dass** das Rohrgitter (4a) als Einheit oder die Rohre (41) des Rohrgitters (4b) einzeln entnehmbar sind und
**dass** das Rohrgitter (4a, 4b) als Einheit oder die Rohre (41) einzeln in der Arbeitsposition geführt und gesichert sind.

18. Vorrichtung nach Anspruch 6, **dadurch gekennzeichnet,**
**dass** das Rohrgitter (4a) als Einheit nach der Art eines Bajonettverschlusses im Reaktorbehälter (5) fixierbar ist.

19. Vorrichtung nach Anspruch 6, **dadurch gekennzeichnet,**
**dass** das die Rohre (41) oder Stäbe des Rohrgitters (4a, 4b) an ihrer Oberfläche einen Rauhigkeitswert zwischen K = 0,001 und K = 0,1 aufweisen.

20. Vorrichtung nach Anspruch 6, **dadurch gekennzeichnet,**
**dass** oberhalb des Reaktors (5) eine Dosierkammer mit der Vormischvorrichtung (2) und einem Lösungs- und Mischbehälter (25) angeordnet ist,
**dass** das Mischrohr (23) der Vormischvorrichtung (2) im Bodenbereich des Lösungs- und Mischbehälters (25) mündet und
**dass** das Lösungsgemisch (WL) über ein Lösungsrohr (26) vom Kopfbereich des Mischbehälters (25) in den Sammelraum (3) des Reaktors (5) geführt wird.

21. Vorrichtung nach Anspruch 6 oder 20, **dadurch gekennzeichnet,**
**dass** die Vormischvorrichtung (2) einen ringförmigen Rohwasserzulauf (Ringdüse 212) besitzt, der in den Umfangsbereich eines flachen Fangtrichters (22) mündet und
**dass** im Abstand über dem Zentrum des flachen Fangtrichters (22) eine Dosiervorrichtung (1) für pulverförmige oder granulatartige Substanzen (S) vorgesehen ist.

22. Vorrichtung nach Anspruch 6 oder 20, **dadurch gekennzeichnet,**
**dass** der Reaktor (5) zwischen zwei Speicherbehältern (Hochbehälter 8) für aufbereitetes Wasser (WA) angeordnet ist und
**dass** der Reaktor (5) über seinen Auslauf (51) wahlweise mit einem oder beiden Speicherbehältern (8) verbunden ist.

## Claims

1. A process for the continuous treatment of water,
wherein a pulverulent or granular water-soluble substance is added to the water, and they are both mixed to form a premix,
wherein the premix is supplied, with turbulent flow, to a dissolving and mixing zone of a tank via a mixing tube and is treated to form a solution mixture consisting of water, dissolved substance, under certain circumstances floating, still undissolved particles, and reaction products that are already present,
wherein the solution mixture leaving the dissolving and mixing zone is conducted, at least over a predetermined reaction time, within a reaction zone of a reaction vessel and
wherein the treated water with its altered properties is finally conducted away via the outlet of the reaction zone into a storage reservoir or to a further treatment stage,
**characterised**
**in that** the solution mixture that leaves the dissolving and mixing zone (LM) in the region of a collecting chamber (3) is uniformly distributed over the inlet cross-section of a reaction zone (R) of constant cross-section,
**in that** at the transition from the collecting chamber (3) to the reactor (5) the distributed solution mixture (WL) is conducted into the reaction zone (R) of the reactor (5) by means of a flow converter (4) which possesses a plurality of openings (43) which are uniformly distributed over the inlet cross-section of the reactor (5) and which are provided with diffuser sections (43b) directed towards the reaction zone (R) and
**in that** the solution mixture (WL) in the reaction zone (R), starting in the plane of the diffuser sections (43b) over almost the entire cross-section of the reactor (5), forms a small-eddy laminar/turbulent flow to the outlet of the reaction zone (R) at a predominantly unified conveying speed (F) between 2 mm/sec and 25 mm/sec.

2. Process according to Claim 1, **characterised**
**in that** the solution mixture (WL) in the flow converter (4) is conducted into the reaction zone (R) via openings in the form of mutually parallel slots (432) with arcuately delimited concave cross-sections (diffuser sections 43b, nozzle sections 43a).

3. Process according to Claim 1, **characterised**
**in that** the reacting solution mixture (WL) in the reaction zone (R) is conducted within a flow extending along an extended, predominantly vertical axis at conveying speed (F) with constant cross-sectional area (A_{R}) .

4. Process according to Claim 1, **characterised**
**in that** in the reacting solution mixture (WL) within the reaction zone (R) in the direction of flow at a spacing downstream of the first flow converter (4) the small-eddy laminar/turbulent flow is stimulated anew with the aid of a further flow converter (4').

5. Process according to Claims 1 and 3, **characterised**
**in that** the reacting solution mixture (WL) is conducted away at the end of the vertical reaction zone (R) via an annular discharge opening (53) oriented approximately coaxially with the cross-section of the reaction zone (R).

6. An apparatus for the treatment of water,
with a feed for a premix (WV) consisting of untreated water (WR) and a soluble substance (S) uniformly distributed therein,
with a dissolving and mixing zone (LM) located in a tank, in which zone stationary and/or moving mixing elements are arranged,
with a reaction zone (R) in a tank-shaped reactor (5), in which zone the solution mixture (WL) reacts chemically with the water and/or with matter distributed therein in a flow over a predetermined distance,
for implementing the process according to Claim 1,
**characterised**
**in that** the tank-shaped reactor (5)
- at least in the region of the reaction zone (R)
- at right angles to the flow of the reacting solution mixture (WL)
exhibits a constant cross-sectional area (A_{R}) which is greater than 0.05 m²,
**in that** a flow converter (4, 4", 4"') with a plurality of openings (43) distributed over the cross-section (A_{R}) of the reaction zone (R), the cross-sections of which openings are designed in the manner of Venturi nozzles (nozzle section 43a, diffuser section 43b), is arranged in the inlet region of the reaction zone (R), which inlet region corresponds approximately to the cross-section of the reactor (5), and
**in that** a collecting chamber (3) for the solution mixture (WL) is arranged upstream of the inlet region of the reaction zone (R) in the direction of flow upstream of the flow converter (4, 4", 4"') .

7. Apparatus according to Claim 6, **characterised**
**in that** the mixing tube (23) or dissolving tube (26) conducting the premix (WV) or the treated solution mixture (WL) leads into the collecting chamber (3) with its axis parallel to the plane of the flow converter (4, 4", 4"').

8. Apparatus according to Claim 6, **characterised**
**in that** the collecting chamber (3) takes the form of a dissolving and mixing zone (LM) and
**in that** fixed and/or moving flow-guiding elements (231; 2321, 2322; 24, 24', 24") are arranged within the collecting chamber (3).

9. Apparatus according to Claim 6, **characterised**
**in that** the sum of the cross-sectional areas of flow (A_{free}) of the openings of the flow converter (4, 4', 4", 4"') amounts to between 2 % and 15% of the cross-sectional area (A_{R}) of the reaction zone (R) of the reactor (5).

10. Apparatus according to Claim 6, **characterised**
**in that** the flow converter (4, 4', 4'') takes the form of a bar grid or tube grid (4a, 4b) with bars or tubes (41) oriented in mutually parallel manner.

11. Apparatus according to Claim 6, **characterised**
**in that** the flow converter (4) consists of two tube grids (4a; 4b or 4, 4') spaced from one another, the tubes (41) of which intersect one another.

12. Apparatus according to Claim 6, **characterised**
**in that** the cross-sectional area of flow (A_{free}) of the flow converter (4, 4') is equal to or greater than the cross-sectional area (A_{Z}) of the feed line via the mixing tube (23) or dissolving tube (26).

13. Apparatus according to Claim 6, **characterised**
**in that** the reaction zone (R) of the reactor (5) is arranged along a perpendicular axis and
**in that** the cross-section (A_{R}) of the reactor (5, 5') is of rectangular, circular or oval form.

14. Apparatus according to Claim 6, **characterised**
**in that** the mixing tube (23) or the dissolving tube (26) leads tangentially into the round or oval collecting chamber (3) taking the form of a dissolving and mixing zone (LM) and
**in that** a radially inwardly directed flow-guiding element (24) is arranged at least at the end of the first circulation of the tangential flow.

15. Apparatus according to Claim 6, **characterised**
**in that** the mixing tube (23) extends as a distributor (232) radially over the middle of the collecting chamber (3) taking the form of a dissolving and mixing zone (LM),
**in that** the front opening (2321) of the distributor (232) is located at a spacing upstream of the opposite wall of the collecting chamber (3') and
**in that** on the side facing towards the closed front wall of the collecting chamber (3) the distributor (232) within the collecting chamber (3) has several mutually spaced radial openings (2322).

16. Apparatus according to Claims 6 and 10, **characterised**
**in that** the tube grid (4a, 4b) exhibits at least one bar or one tube (42) with elliptical cross-section, which is adjustable about a longitudinal axis.

17. Apparatus according to Claim 6, **characterised**
**in that** the tube grid (4a) can be removed as a unit or the tubes (41) of the tube grid (4b) can be removed individually and
**in that** the tube grid (4a, 4b) is guided and secured in the working position as a unit or the tubes (41) are guided and secured in the working position individually.

18. Apparatus according to Claim 6, **characterised**
**in that** the tube grid (4a) is capable of being fixed as a unit in the reactor vessel (5) in the manner of a bayonet catch.

19. Apparatus according to Claim 6, **characterised**
**in that** the tubes (41) or bars of the tube grid (4a, 4b) exhibit on their surface a roughness value between K = 0.001 and K = 0.1.

20. Apparatus according to Claim 6, **characterised**
**in that** a metering chamber with the premixing apparatus (2) and with a dissolving and mixing tank (25) is arranged above the reactor (5),
**in that** the mixing tube (23) of the premixing apparatus (2) discharges in the bottom region of the dissolving and mixing tank (25) and
**in that** the solution mixture (WL) is guided from the top region of the mixing tank (25) into the collecting chamber (3) of the reactor (5) via a dissolving tube (26).

21. Apparatus according to Claim 6 or 20, **characterised**
**in that** the premixing apparatus (2) possesses an annular untreated-water intake (ring nozzle 212) which leads into the peripheral region of a flat receiving funnel (22) and
**in that** a metering apparatus (1) for pulverulent or granulated substances (S) is provided at a spacing above the centre of the flat receiving funnel (22).

22. Apparatus according to Claim 6 or 20, **characterised**
**in that** the reactor (5) is arranged between two storage tanks (overhead tanks 8) for treated water (WA) and
**in that** the reactor (5) is optionally connected via its outlet (51) to one or both storage tanks (8).

## Revendications

1. Procédé pour le traitement continu de l'eau, selon lequel
une substance pulvérulente ou granuleuse soluble dans l'eau est ajoutée proportionnellement à l'eau et les deux sont mélangés pour former un mélange préalable,
le mélange préalable est amené grâce à un tube mélangeur dans une zone de dissolution et de mélange d'un récipient avec un écoulement turbulent, et il est transformé en un mélange de solution composé d'eau, de substance dissoute, parfois de particules en suspension pas encore dissoutes et de produits de réaction déjà présents,
le mélange de solution qui sort de la zone de dissolution et de mélange est amené, au moins sur une durée de réaction prédéfinie, dans une zone de réaction d'un récipient de réaction, et
l'eau traitée, avec ses propriétés modifiées, est finalement évacuée par la sortie de la zone de réaction vers un réservoir ou un autre niveau de traitement,
**caractérisé en ce que** le mélange de solution qui sort de la zone de dissolution et de mélange (LM) dans la zone d'un espace collecteur (3) est réparti régulièrement sur la section transversale d'entrée d'une zone de réaction (R) à section transversale constante,
**en ce que** le mélange de solution réparti (WL) est amené dans la zone de réaction (R) du réacteur (5) au niveau de la transition (3) avec le réacteur (5) à l'aide d'un convertisseur d'écoulement (4) pourvu d'une multiplicité d'ouvertures (43) qui sont réparties régulièrement sur la section transversale d'entrée du réacteur (5) et qui sont pourvues de parties de diffusion (43b) dirigées vers la zone de réaction (R),
et **en ce que** le mélange de solution (WL) forme dans la zone de réaction (R), en commençant dans le plan des parties de diffusion (43b) sur quasiment toute la section transversale du réacteur (5), un écoulement à turbulence laminaire à petits tourbillons, d'une vitesse d'acheminement (F) globalement unique située entre 2 mm/s et 25 mm/s vers la sortie de la zone de réaction (R).

2. Procédé selon la revendication 1, **caractérisé en ce que** le mélange de solution (WL), dans le convertisseur d'écoulement (4), est amené dans la zone de réaction (R) par des ouvertures en forme de fentes parallèles (432) avec des sections transversales concaves à délimitation courbe (parties de diffusion 43b, parties d'injection 43a).

3. Procédé selon la revendication 1, **caractérisé en ce que** le mélange de solution (WL) qui réagit est guidé dans la zone de réaction (R) à l'intérieur d'un écoulement qui longe un axe allongé globalement vertical à une vitesse d'acheminement (F) et avec une section transversale constante (A_{R}).

4. Procédé selon la revendication 1, **caractérisé en ce que** dans le mélange de solution (WL) qui réagit, l'écoulement à turbulence laminaire à petits tourbillons est à nouveau activé à l'intérieur de la zone de réaction (R) dans le sens d'écoulement, à une certaine distance derrière le premier convertisseur d'écoulement (4), à l'aide d'un autre convertisseur d'écoulement (4').

5. Procédé selon les revendications 1 et 3, **caractérisé en ce que** le mélange de solution (WL) qui réagit est évacué, à l'extrémité de la zone de réaction verticale (R), par une ouverture d'évacuation (53) annulaire qui est à peu près coaxiale par rapport à la section transversale de la zone de réaction (R).

6. Dispositif pour le traitement de l'eau, comportant
une amenée pour un mélange préalable (WV) composé d'eau brute (WR) et d'une substance soluble (S) répartie régulièrement dans celle-ci,
une zone de solution et de mélange (LM) qui se trouve dans un récipient et dans laquelle sont disposés des éléments mélangeurs fixes et/ou mobiles,
et une zone de réaction (R) dans un réacteur en forme de récipient (5), dans laquelle le mélange de solution (WL) réagit chimiquement dans un écoulement sur une trajectoire prédéfinie, avec l'eau et/ou les substances réparties dans celle-ci,
pour la mise en oeuvre du procédé selon la revendication 1,
**caractérisé en ce que** le réacteur en forme de récipient (5) présente
- au moins dans la région de la zone de réaction (R)
- transversalement par rapport à l'écoulement du mélange de solution qui réagit (WL)
une section transversale constante (A_{R}) qui est supérieure à 0,05 m²,
**en ce que** dans la région d'entrée de la zone de réaction (R) qui correspond à peu près à la section transversale du réacteur (5), il est prévu un convertisseur d'écoulement (4, 4", 4"') avec une multiplicité d'ouvertures (43) qui sont réparties sur la section transversale (A_{R}) de la zone de réaction (R) et dont les sections transversales sont formées à la manière de tubes de Venturi (partie d'injection 43a, partie de diffusion 43b),
et **en ce qu'**il est prévu avant la région d'entrée de la zone de réaction (R), avant le convertisseur d'écoulement (4, 4", 4"') dans le sens d'écoulement, un espace collecteur (3) pour le mélange de solution (WL).

7. Dispositif selon la revendication 6, **caractérisé en ce que** le tube mélangeur (23) ou le tube de solution (26) dans lequel passe le mélange préalable (WV) ou le mélange de solution préparé (WL) débouche dans l'espace collecteur (3) avec son axe parallèle au plan du convertisseur d'écoulement (4, 4", 4"').

8. Dispositif selon la revendication 6, **caractérisé en ce que** l'espace collecteur (3) est conçu comme une zone de solution et de mélange (LM),
et **en ce qu'**il est prévu à l'intérieur de l'espace collecteur (3) des éléments de guidage d'écoulement (231 ; 2321, 2322 ; 24, 24', 24") fixes et/ou mobiles.

9. Dispositif selon la revendication 6, **caractérisé en ce que** la somme des sections transversales de passage (A_{frei}) des ouvertures du convertisseur d'écoulement (4, 4', 4", 4"') représente entre 2 % et 15 % de la section transversale (A_{R}) de la zone de réaction (R) du réacteur (5).

10. Dispositif selon la revendication 6, **caractérisé en ce que** le convertisseur d'écoulement (4, 4', 4") est conçu comme un réseau de tiges ou de tubes (4a, 4b) avec des tiges ou des tubes (41) parallèles.

11. Dispositif selon la revendication 6, **caractérisé en ce que** le convertisseur d'écoulement (4) se compose de deux réseaux de tubes (4a ; 4b ou 4, 4') qui sont espacés l'un de l'autre et dont les tubes (41) se croisent.

12. Dispositif selon la revendication 6, **caractérisé en ce que** la section transversale de passage (A_{frei}) du convertisseur d'écoulement (4, 4') est supérieure ou égale à la section transversale (A_{Z}) de l'amenée par le tube mélangeur (23) ou le tube de solution (26).

13. Dispositif selon la revendication 6, **caractérisé en ce que** la zone de réaction (R) du réacteur (5) est disposée le long d'un axe vertical,
et **en ce que** la section transversale (AR) du réacteur (5, 5') est rectangulaire, ronde ou ovale.

14. Dispositif selon la revendication 6, **caractérisé en ce que** le tube mélangeur (23) ou le tube de solution (26) débouche tangentiellement dans l'espace collecteur (3) rond ou ovale conçu comme une zone de disolution et de mélange (LM),
et **en ce qu'**il est prévu au moins à l'extrémité du premier renversement de l'écoulement tangentiel un élément de guidage d'écoulement (24) dirigé radialement vers l'intérieur.

15. Dispositif selon la revendication 6, **caractérisé en ce que** le tube mélangeur (23) s'étend comme distributeur (232) radialement sur le milieu de l'espace collecteur (3) conçu comme une zone de dissolution et de mélange (LM),
**en ce que** l'ouverture frontale (2321) du distributeur (232) se trouve à une certaine distance de la paroi opposée de l'espace collecteur (3'),
et **en ce que** le distributeur (232) prévu à l'intérieur de l'espace collecteur (3) présente sur le côté tourné vers la paroi frontale fermée dudit espace collecteur (3) plusieurs ouvertures radiales (2322) espacées les unes des autres.

16. Dispositif selon les revendications 6 et 10, **caractérisé en ce que** le réseau de tubes (4a, 4b) comprend au moins une tige ou un tube (42) à section transversale elliptique, qui est réglable autour d'un axe longitudinal.

17. Dispositif selon la revendication 6, **caractérisé en ce que** le réseau de tubes (4a) ou les tubes (41) du réseau de tubes (4b) peuvent être enlevés sous la forme d'une unité ou individuellement, respectivement,
et **en ce que** le réseau de tubes (4a, 4b) ou les tubes (41) sont amenés et fixés dans la position de travail sous la forme d'une unité ou individuellement, respectivement.

18. Dispositif selon la revendication 6, **caractérisé en ce que** le réseau de tubes (4a) est apte à être fixé dans le récipient réacteur (5) sous la forme d'une unité à la manière d'un verrouillage à baïonnette.

19. Dispositif selon la revendication 6, **caractérisé en ce que** les tubes (41) ou les tiges du réseau de tubes (4a, 4b) présentent sur leur surface une valeur de rugosité située entre K=0,001 et K=0,1.

20. Dispositif selon la revendication 6, **caractérisé en ce qu'**il est prévu au-dessus du réacteur (5) une chambre de dosage avec le dispositif de mélange préalable (2) et un récipient de dissolution et de mélange (25),
**en ce que** le tube mélangeur (23) du dispositif de mélange préalable (2) débouche dans la zone du fond du récipient de dissolution et de mélange (25),
et **en ce que** le mélange de solution (WL) est amené par un tube de solution (26) de la zone supérieure du récipient mélangeur (25) à l'espace collecteur (3) du réacteur (5).

21. Dispositif selon la revendication 6 ou 20, **caractérisé en ce que** le dispositif de mélange préalable (2) a une amenée d'eau brute annulaire (injecteur annulaire 212) qui débouche dans la zone périphérique d'un entonnoir d'écoulement plat (22),
et **en ce qu'**il est prévu à une certaine distance au-dessus du centre de l'entonnoir d'écoulement plat (22) un dispositif de dosage (1) pour des substances pulvérulentes ou granuleuses (S).

22. Dispositif selon la revendication 6 ou 20, **caractérisé en ce que** le réacteur (5) est disposé entre deux réservoirs (réservoirs hauts 8) pour l'eau traitée (WA),
et **en ce que** le réacteur (5) est relié sélectivement à l'un des réservoirs (8) ou aux deux par l'intermédiaire de sa sortie (51) .
